# EUROPEAN PATENT APPLICATION

(11) **EP 3 862 953 A1**
(43) Date of publication of application: **11.08.2021**
(21) Application number: 20156392.1
(22) Date of filing: 10.02.2020
(51) Int. Cl.: G06Q 20/10, G06Q 20/34, G06Q 20/38, G06Q 20/40

(54) **METHOD FOR ENHANCING SENSITIVE DATA SECURITY**

(71) Applicant: Mastercard International Incorporated, Purchase NY 10577 (US)
(72) Inventor: DHARMAIAH KALLUGUDDE, Manu, Maidenhead, Berkshire SL6 2GG (GB)
(74) Representative: Gill Jennings & Every LLP

(57) **Abstract**

The invention discloses a computer-implemented method of processing a transaction made using a user device, the method comprising receiving a transaction request from a transaction processing device communicating with the user device, wherein the transaction request includes a first token obtained from the user device; verifying the first token received from the transaction processing device; identifying an account associated with the first token after verification; seeking an approval of the transaction request based on the identified account; generating a second token, different from the first token, upon receiving the approval; and sending the approval along with the second token to the transaction processing device.

## Description

### Field of Invention

The present invention relates to a method for enhancing sensitive data security. In particular, it relates to hiding sensitive data when processing payment transactions over a network.

### Background

In a system processing a sensitive data payload over a network, typically the party or parties seeking to protect the sensitive data need to be careful in dealing with the sensitive data. The data maybe stolen at the point of transmission or over public network links over which the data is transmitted. The trust level of such links may be less than ideal, which can enable an unauthorised party to intercept communications over these links, e.g. in a 'man in the middle' attack.

One example of a system where this consideration comes into play is at an Automated Teller Machine (ATM), also known as a cash machine. A user makes using a payment card issued by an issuer such as bank to withdraw money from an ATM. The card has sensitive data of the user usually displayed on the card itself as well as stored on a magnetic stripe and/or chip embedded in the card. When the user inserts or swipes the card at the ATM and enter a PIN, the ATM checks the data stored on the card. The ATM then communicates with the issuer over the network and dispenses cash for the user if approved by the issuer.

An unauthorised party, referred to herein as an eavesdropper, seeking to perpetrate fraud may be able to steal the sensitive data on the card by using a skimmer device and/or hidden cameras placed in vicinity of the ATM. Moreover, the eavesdropper may leverage relatively insecure points within the network path to intercept the sensitive data as it is passed along the chain.

Apart from ATMs, transactions made at kiosks, merchant outlets, vending machines, etc. are also susceptible to such frauds. Whether the transactions are made using conventional card or using contactless cards, the data on the card is at risk.

To overcome the problem of misappropriation of sensitive data on the card, some issuers now issue cards without any information physically written on the card. While this provides protection against thefts made using devices such as hidden cameras, it does not address the problem of data security over the network. As these cards still have the sensitive data stored in the magnetic stripe and/or chips, which a perpetrator may intercept, they are not completely safe.

The present invention may ameliorate one or more of the problems mentioned above and in particular may reduce the likelihood of success of a man in the middle attack.

### Summary of the Invention

According to an aspect of the invention, there is provided a computer-implemented method of processing a transaction made using a user device. The method comprises receiving a transaction request from a transaction processing device communicating with the user device, wherein the transaction request includes a first token obtained from the user device; verifying the first token received from the transaction processing device; identifying an account associated with the first token after verification; seeking an approval of the transaction request based on the identified account; generating a second token, different from the first token, upon receiving the approval; and sending the approval along with the second token to the transaction processing device.

Advantageously, with the method described above it is possible to perform a secure transaction using a user device such as a bank card at a cash point or a vending machine. By the use of ultra-low value tokens, which are used for just one transaction, the chances of fraud are minimized.

Preferably, the method further comprises replacing the first token with the second token in the user device.

Preferably, the transaction request further includes a first cryptogram obtained from the user device.

Preferably, the method further comprises decrypting data stored on the user device to obtain the first token and the first cryptogram.

Preferably, the method further comprises generating a second cryptogram, different from the first cryptogram, along with generating the second token.

Preferably, the method further comprises encrypting the second token and the second cryptogram before sending to the transaction processing device.

Preferably, the encryption is done using an RSA key and a customer PIN.

Preferably, the method further comprises detokenising the first token to identify the account associated with the first token.

According to another aspect of the invention, there is provided a system for processing a transaction made using a user device. The system comprising a server configured to receive a transaction request from a transaction processing device communicating with the user device, wherein the transaction request includes a first token obtained from the user device; verify the first token received from the transaction processing device; identify an account associated with the first token after verification; seek an approval of the transaction request from an issuer based on the identified account; generate a second token, different from the first token, upon receiving the approval; and send the approval along with the second token to the transaction processing device.

Preferably, the server is further configured to detokenise the first token to identify the account associated with the first token, generate a second cryptogram, different from the first cryptogram, along with generating the second token; and encrypt the second token and the second cryptogram before sending to the transaction processing device.

Preferably, the server is further configured to send a decline message to the transaction processing device if the first token and/or the first cryptogram are not valid.

Preferably, the server is further configured to send a unique number associated with the first token to the issuer.

Preferably, the server is further configured to deactivate the first token associated with the user device.

Preferably, the user device is a payment card issued by the issuer.

Preferably, the transaction processing device is an automated teller machine.

### Brief Description of the Drawings

Embodiments of the present invention are described below, by way of example only, with reference to the accompanying drawings, in which:
Fig. 1 shows a system of various interconnected entities involved in a transaction over a network;
Fig. 2 is a flow diagram of steps performed by an issuer in the system of Fig. 1;
Fig. 3 is a flow diagram of steps performed by a transaction processing device in the system of Fig. 1;
Fig. 4 is a flow diagram of steps performed by a tokenization platform in the system of Fig. 1;
Fig. 5 is a bock diagram of a data processing device implementing functions performed by the entities in the system of Fig. 1.

### Detailed Description

As used herein, the followings terms have the following meanings:
Sensitive data: data that should be exposed in cleartext form to authorized entities only. Examples of sensitive data include a Primary Account Number (PAN), a private key, a cryptogram and an authentication credential.

Token: an entity that acts as a placeholder for a corresponding item of sensitive data, where typically the token is generated in some predictable manner from the sensitive data item such that entities in possession of the knowledge of how the token was generated can obtain the sensitive data from the token. An example of a token is an alphanumeric string that is generated based on a PAN.

Eavesdropping: the act or process of infiltrating a communication channel so as to intercept data transmitted over said channel, as committed by a party that is not authorised to gain access to data transmitted over said channel. Eavesdropping is typically a fundamental part of a man in the middle attack.

Trusted channel: a communications path that is hardened against attempts to gain access by unauthorised third parties, e.g. by eavesdropping. A virtual private network (VPN) or a private network are examples of trusted channels.

Public network component: a network component such as a switch, router, server, etc. that is accessible by any data processing device. Typically, little or no authentication is required to access a public network component.

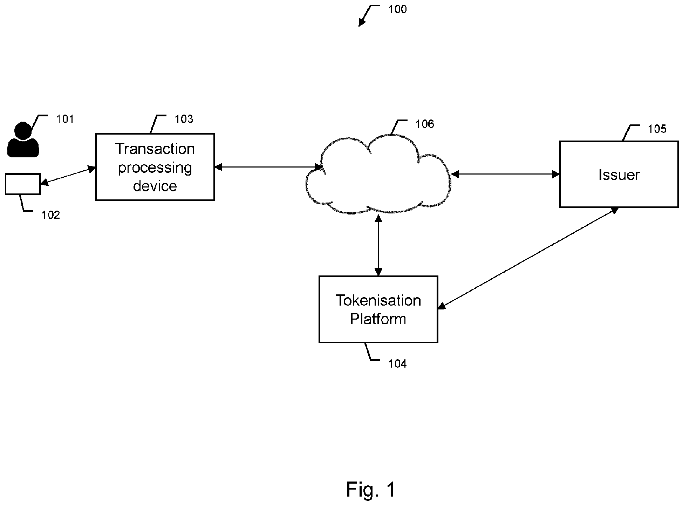

Fig. 1 shows an overview of a system 100 capable of implementing the invention. System 100 is discussed in the context of processing of transactions, but it will be appreciated that system 100 has application in any environment in which one or more entities requires receipt of sensitive data. Examples include a provisioning node of an loT network that has a primary node and one or more secondary nodes.

As shown in Fig. 1, the system 100 comprises a user 101 in possession of a user device 102, a transaction processing device 103, a tokenization platform 104, an issuer 105, and a network 106. In the present example, the user device 102 is a payment card such as debit or credit card issued to the user 100 by the issuer 105. The payment card is typically linked to a payment account held by the user 101 with the issuer 105. The payment card has a magnetic stripe and/or chip with sensitive data stored on it. The payment card may also have a Near-Field Communication (NFC) chip for facilitating contactless payments. In another example, the user device 102 may be an electronic device such as mobile phone with an NFC chip for contactless payments. In this case, the payment card is virtually stored in the electronic device and linked with the issuer 105. The user 101 may store more than one virtual payment cards in such an electronic device.

In the present example, the transaction processing device 103 is an ATM or a cash machine capable of dispensing cash with the use of the user device 102. The device 103 may be managed by the issuer 105 or any authorized third party. In another example, the transaction processing device 103 may be a Point-of-Sale (PoS) terminal at merchant side (not shown) which is capable of processing a payment made using the user device 102.

The tokenization platform 104, such as Mastercard Digital Enablement Service (MDES), creates a token, the token being associated with the sensitive data payload. The token can be created in a manner known in the art. The token may be created by a tokenization process that makes use of at least a part of the sensitive data payload so as to associated the token with the sensitive data payload. In the case where the sensitive data payload is a cryptogram, the tokenization process may take a primary account number (PAN) corresponding to the cryptogram as input and output a tokenized PAN (tPAN) as an output. Generation of tPANs is known in the art per se. The tokenization platform 104 transmits the token to the transaction processing device 103 over the network 106. The token has no intrinsic value so it is not of concern if it is obtained by an eavesdropper listening in on network 106. The network 106 can therefore be trusted or untrusted (such as the internet).

The issuer 105 is a bank or a financial institution that the user 101 holds a payment account with. The issuer 105 issues a payment card such as the user device 102 to the user 101 using which the user 101 can access the money in his or her account through the transaction processing device 103. The issuer 105 is linked to the tokenization platform 104 through a trusted channel as they exchange sensitive data between them. The issuer 105 may be linked to the transaction processing device 103 through a trusted channel but typically through the network 106. It is to be understood that the issuer 105 comprises one or more data processing servers preferably operated and managed by the issuer.

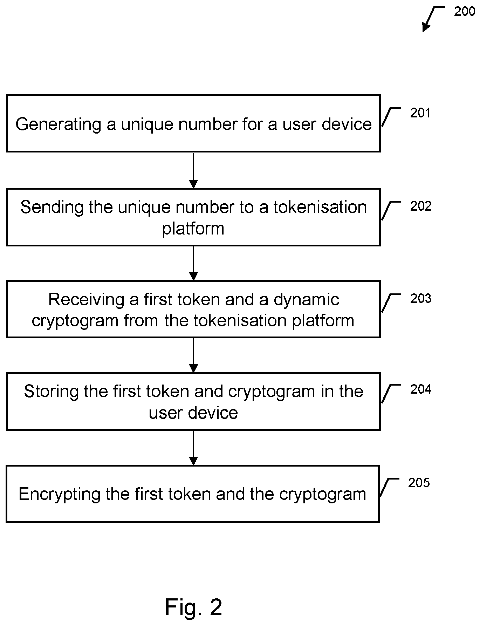

The system 100 is configured to perform the method as described below in connection with Figs. 2-4. It is to be understood that the steps have been described using three separate flow diagrams for the sake of simplicity. This does not reflect the actual sequence of events. Also, some of the routine steps are omitted which would otherwise be understood by the skilled person.

In Fig. 2, the process 200 is performed by the issuer 105 in the system 100. The process 200 comprises the steps of creating the user device 102 or the card 102 for the user 100. It is to be understood that the card 102 is created for the user 100 once and is valid for a set period of time (e.g. up to a preset expiry date) and is preferably only re-issued if it is lost, stolen, damaged, or expired.

At step 201, a unique number is generated for a user device. In the present example, the issuer 105 generates a unique number, typically a 16-digit card number, for the card 102. The issuer 105 may also generate other values such as expiry date and CVV number. The issuer 105, however, does not print these details on the card 102. Such sensitive data is not written on the card 102, but the card may have information such as user's name, bank's name/logo, payment service such as Mastercard's logo written onto it.

At step 202, the unique number is sent to a tokenization platform. In the present example, the issuer 105 sends the generated 16-digit number to the tokenization platform 104 through a trusted channel. The tokenization platform 104 generates a first token corresponding the unique number and a dynamic cryptogram and sends these to the issuer 105. The tokenization platform 104 keep a record of the first token and the dynamic cryptogram generated for each unique number sent by the issuer 105 for each specific user.

At step 203, a first token and a dynamic cryptogram is received from the tokenization platform. In the present example, the issuer 105 receives the first token and the dynamic cryptogram, as generated by the tokenization platform 104, for the card 102.

At step 204, the first token and the cryptogram is stored on the user device. In the present example, the issuer 105 stores the received first token and the cryptogram on a magnetic stripe and/or a chip on the card 102.

At step 205, the first token and the cryptogram are encrypted. In the present example, the stored first token and the cryptogram on the card 102 are encrypted with an RSA key and a user PIN for added security. This form of encryption is well-known in the art and understood by the skilled person. The card 102 is then sent to the user 101 along with the PIN, which the user is typically asked to change on first use. The user-defined PIN is a sensitive piece of data only known to the user, unless it is somehow misappropriated or disclosed by the user.

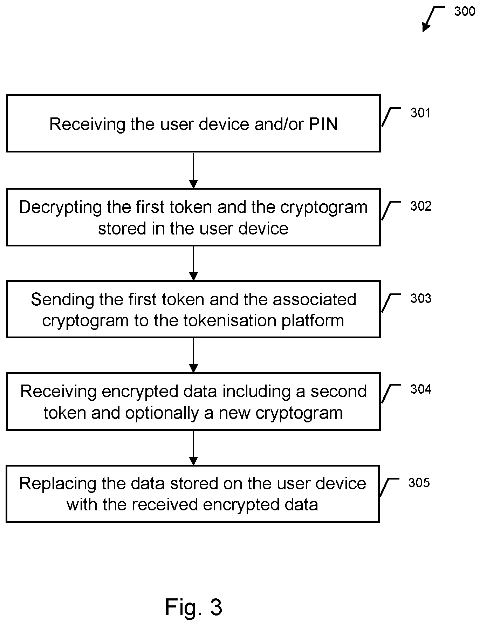

In Fig. 3, the process 300 is performed by the transaction processing device 103 in the system 100. The process 300 comprises the steps of processing a transaction request made using the card 102 through the transaction processing device 103. For the sake of simplicity, in the description below, the transaction processing device is referred to as ATM 103. It is to be noted that although the process is explained with reference of a card and an ATM, it is equally suited for transactions made using a contactless payment device through a PoS terminal or other similar processing devices.

At step 301, the user device and/or PIN is received. In the present example, the user 101 initiates a transaction request through the ATM 103 by inserting or swiping the card 102 at the ATM 103. The ATM 103 typically has a display screen with a user interface to guide the user. After inserting or swiping the card 102, the ATM 103 preferably prompts the user 101 to enter a PIN linked to the card 102. In case of contactless card or device, no PIN is needed for making a transaction up to a certain amount. However, higher value transactions may be made using a device with biometric sensors such as a fingerprint scanner and a compatible payment service such as Apple Pay™ or Google Pay™.

At step 302, the first token and the cryptogram stored in the user device are decrypted. In the present example, as the data stored on the chip of the card 102 is encrypted by the issuer 105, the ATM 103 uses the user-entered PIN as the key to decrypt the first token and the cryptogram associated with the unique card number. If the entered PIN is incorrect, the ATM 103 is unable to decrypt the data stored on the card 102 and denies the transaction request. The user 101 may be allowed a re-enter the PIN for a set number of times, however, failing to enter the correct PIN in those attempts may lock the card for security reasons.

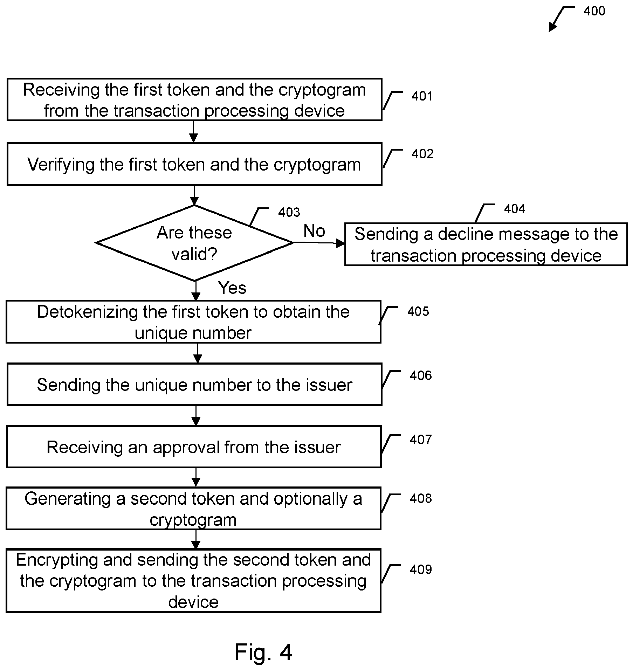

At step 303, the first token and the cryptogram are sent to the tokenization platform. In the present example, after the ATM 103 successfully decrypts the first token and the cryptogram stored on the card 102, the ATM 103 then sends these to the tokenization platform 104 over the network 106. It is to be understood that the ATM 103 may send the data to another entity such as a directory server, which in turn passes it to the tokenization platform 104. The tokenization platform 104 then processes this data as explained with reference to Fig. 4 below.

At step 304, encrypted data including a second token and optionally a new cryptogram is received. In the present example, after processing the transaction request at the tokenization platform 104 and the issuer 105, the ATM 103 receives a second token, different from the first token, and optionally a new cryptogram in an encrypted form from the tokenization platform 104 over the network 106. This data is received together with an approval for the transaction request based on which the ATM 103 dispenses requested cash to the user 101.

At step 305, the data stored on the user device is replaced with the received encrypted data. In the present example, the ATM 103 replaces the first token and the cryptogram stored on the card 102 with the encrypted data received from the tokenization platform 104. The encrypted data containing the second token and optionally a new cryptogram replaces the first token and the existing cryptogram for added security. Without physically replacing the card 102, the data on the card is renewed. After replacing the data on the card 102, the ATM 103 returns the card 102 to the user 101 for future use. When the user 101 uses the card next time on the ATM 103 for requesting a transaction, the transaction is securely processed using the second token and the new cryptogram.

In Fig. 4, the process 400 is performed by the tokenization platform 104 in the system 100. The process 400 comprises the steps of making a transaction more secure by the use of one-time use tokens and cryptograms. It is to be noted that the tokenization platform 104 may interface with other entities not shown in the system 100 for performing these or other routine steps known to the skilled person.

At step 401, the first token and the cryptogram are received from the transaction processing device. In the present example, the ATM 103 sends the first token and the cryptogram as decrypted from the card 102 over the network 106 to the tokenization platform 104. The tokenization platform 104 may receive these via an intermediate entity present in the system 100.

At step 402, the first token and the cryptogram are verified. In the present example, the tokenization platform 104 has a record of the first token and the cryptogram it initially generated for the card 102 and therefore can verify if the token and/or the cryptogram have been tampered with during transmission. Authenticating a transaction by verifying the token and cryptogram is well-known in the art.

At step 403, it is determined if the token and the cryptogam are valid. In the present example, the tokenization platform 104 compares the received first token and the cryptogram with its record to confirm if these are valid or not. If these are found to be valid, the process proceeds to step 405 or else to step 404.

At step 404, a decline message is sent to the transaction processing device. In the present example, if the tokenization platform 104 finds the token and/or the cryptogram to be invalid, then it sends a message to the ATM 103 declining the transaction request.

This is done as the card 102 or the data stored on it is suspected to be tampered with and the transaction is aborted to avoid a fraud.

At step 405, the first token is detokenized to obtain the unique number. In the present example, if the tokenization platform 104 determines the first token and the cryptogram to be valid, it detokenizes the first token to reveal the unique card number associated with the card 102. The technique for detokenizing the token is well-known in the art.

At step 406, the unique number is sent to the issuer. In the present example, the tokenization platform 104 sends the obtained unique card number to the issuer 105 for it to process the transaction request. The tokenization platform 104 sends this information to the issuer 105 over a trusted channel as it comprises the sensitive data.

At step 407, an approval is received from the issuer. In the present example, the tokenization platform 104 waits for an approval from the issuer 105 after sending the unique card number. Under normal circumstances, the issuer 105 approves the transaction request and sends an approval message to the tokenization platform 104. However, it is to be noted that the issuer 105 may reject the transaction if a foul play is suspected or the user's account has insufficient funds. In that case, the issuer 105 sends a decline message to the tokenization platform which in turn communicates that to the ATM 103.

At step 408, a second token and optionally a cryptogram are generated. In the present example, after receiving the approval from the issuer 105, the tokenization platform 104 generates a second token, different from the first token, associated with the unique card number. At the same time, the tokenization platform 104 deactivates the first token so that it can no longer be used for initiating a transaction. Optionally, the tokenization platform 104 also generates a new cryptogram corresponding the second token. The issuer 105 preferably sets a number of cryptograms to be generated. For example, one cryptogram can be generated for one transaction, in which case each time a transaction occurs a new cryptogram is generated along with a new token. In another example, a cryptogram may be valid for a set number of transactions and only generated again after the set number of transactions have occurred.

At step 409, the second token and the cryptogram are encrypted and sent to the transaction processing device. In the present example, the tokenization platform 104 encrypts the generated second token and the cryptogram and sends them to the ATM 103 along with the transaction approval. The tokenization platform 104 may send these through the unsecure network 106 as it is encrypted data and not particularly sensitive.

As described above, using this technique of generating a new token and a dynamic cryptogram for each transaction enhances the security of transactions. Moreover, as the sensitive data such as the card number is neither displayed nor stored on the user device, the risk of a fraud is minimized.

It will be appreciated that any of the methods described herein, and any particular step of said methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of a method may be implemented by different processors that are all collectively acting in accordance with computer-readable instructions stored on one or more storage media. The processor or processors may be component(s) of system 100, for example a processor of the transaction processing device 103, the tokenization platform 104, and the issuer 105.

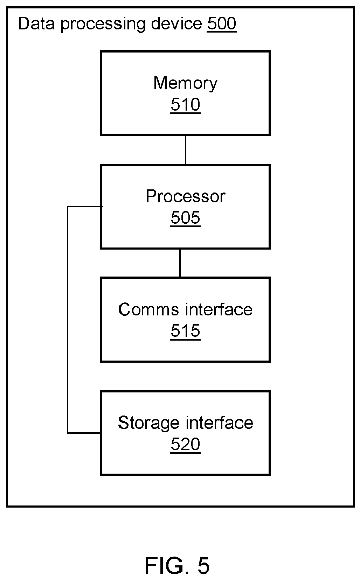

Equally, any steps of any of the methods described herein may be performed by data processing devices as described in respect of system 100 of Fig. 1. By way of example, Fig. 5 shows in schematic form a data processing device 500 that is suitable for performing the functions of the transaction processing device 103, the tokenization platform 104, and the issuer 105.

Data processing device 500 includes a processor 505 for executing instructions. Instructions may be stored in a memory 510, for example. Processor 505 may include one or more processing units (e.g., in a multi-core configuration) for executing instructions. The instructions may be executed within a variety of different operating systems on the data processing device 500, such as UNIX, LINUX, Microsoft Windows®, etc. More specifically, the instructions may cause various data manipulations on data stored in memory 510 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 505 is operatively coupled to a communication interface 515 such that data processing device 500 is capable of communicating with a remote device, such as another data processing device of system 100. For example, communication interface 515 may receive communications from another member of system 100 over the network 106 or a trusted channel, depending on the function of data processing device 500 within the context of system 100.

Processor 505 may also be operatively coupled to a storage device, depending on the function of data processing device 500 within the context of system 100. The storage device is any computer-operated hardware suitable for storing and/or retrieving data, where in the case of a secure storage medium the data is stored and retrieved securely.

Storage device can be integrated in data processing device 500, or it can be external to data processing device 500 and located remotely. For example, data processing device 500 may include one or more hard disk drives as a storage device. Alternatively, where the storage device is external to data processing device 500, it can comprise multiple storage units such as hard disks or solid state disks in a redundant array of inexpensive disks (RAID) configuration. The storage device may include a storage area network (SAN) and/or a network attached storage (NAS) system.

Processor 505 can be operatively coupled to the storage device via a storage interface 520. Storage interface 520 is any component capable of providing processor 505 with access to the storage device. Storage interface 520 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 505 with access to the storage device.

Memory 510 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be distributed among secondary merchant data processing devices in a secure manner. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method of processing a transaction made using a user device, the method comprising:
receiving a transaction request from a transaction processing device communicating with the user device, wherein the transaction request includes a first token obtained from the user device;
verifying the first token received from the transaction processing device;
identifying an account associated with the first token after verification;
seeking an approval of the transaction request based on the identified account;
generating a second token, different from the first token, upon receiving the approval; and
sending the approval along with the second token to the transaction processing device.

2. The method of claim 1, further comprising replacing the first token with the second token in the user device.

3. The method of claim 1 or 2, wherein the transaction request further includes a first cryptogram obtained from the user device.

4. The method of claim 3, further comprising decrypting data stored on the user device to obtain the first token and the first cryptogram.

5. The method of claim 3 or 4, further comprising generating a second cryptogram, different from the first cryptogram, along with generating the second token.

6. The method of claim 5, further comprising encrypting the second token and the second cryptogram before sending to the transaction processing device.

7. The method of claim 6, wherein the encryption is done using an RSA key and a customer PIN.

8. The method of any preceding claim, further comprising detokenising the first token to identify the account associated with the first token.

9. A system for processing a transaction made using a user device, the system comprising a server configured to:
receive a transaction request from a transaction processing device communicating with the user device, wherein the transaction request includes a first token obtained from the user device;
verify the first token received from the transaction processing device;
identify an account associated with the first token after verification;
seek an approval of the transaction request from an issuer based on the identified account;
generate a second token, different from the first token, upon receiving the approval; and
send the approval along with the second token to the transaction processing device.

10. The system of claim 9, wherein the server is further configured to:
detokenise the first token to identify the account associated with the first token
generate a second cryptogram, different from the first cryptogram, along with generating the second token; and
encrypt the second token and the second cryptogram before sending to the transaction processing device.

11. The system of claim 10, wherein the server is further configured to send a decline message to the transaction processing device if the first token and/or the first cryptogram are not valid.

12. The system of any of claims 9 to 11, wherein the server is further configured to send a unique number associated with the first token to the issuer.

13. The system of any of claims 9 to 12, wherein the server is further configured to deactivate the first token associated with the user device.

14. The system of any of claims 9 to 13, wherein the user device is a payment card issued by the issuer.

15. The system of any of claims 9 to 14, wherein the transaction processing device is an automated teller machine.
